Europäisches Patentamt

European Patent Office

Office européen des brevets

(11) Veröffentlichungsnummer: **0 330 292**
**A2**

(12) **EUROPÄISCHE PATENTANMELDUNG**

(21) Anmeldenummer: 89200889.7

(22) Anmeldetag: 02.10.85

(51) Int. Cl.⁴: **G11B 23/03**

(30) Priorität: 07.01.85 DE 3500323

(43) Veröffentlichungstag der Anmeldung:
**30.08.89 Patentblatt 89/35**

(60) Veröffentlichungsnummer der früheren
Anmeldung nach Art. 76 EPÜ: **0 188 663**

(84) Benannte Vertragsstaaten:
**AT BE CH DE FR GB IT LI LU NL SE**

(71) Anmelder: **POLYGRAM GmbH**
**Glockengiesserwall 3**
**D-2000 Hamburg 1(DE)**

㉄ **DE**

Anmelder: **Polygram International Holding B.V.**
**Gerrit van der Veenlaan 4**
**NL-3743 DN Baarn(NL)**

㉄ **BE CH FR GB IT LI LU NL SE AT**

(72) Erfinder: **Grobecker, Hermann**
**Scheelenkamp 6**
**D-3008 Garben(DE)**
Erfinder: **Mestdagh, Gilbert Eduard**
**Bremstraat 29**
**Zonhoven(BE)**
Erfinder: **Ito, Masashi**
**9-2 Showaen Settsu**
**Osaka(JP)**

(74) Vertreter: **Schrijnemaekers, Hubert Joannes Maria et al**
**Internationaal Octrooibureau B.V. Prof.**
**Holstlaan 6**
**NL-5656 AA Eindhoven(NL)**

(54) **Kombination einer Aufbewahrungskassette und einem Element zur Aufnahme und Halterung einer kreisförmigen Informationsplatte sowie Aufbewahrungskassette und Element zur Aufnahme und Halterung zum Gebrauch in der Kombination.**

(57) Kombination einer mit einem Boden (29) und einem Deckel (30) versehenen Aufbewahrungskassette (28) und eines Elementes zur Aufnahme und Halterung einer Informationsplatte (4). Das Element ist mit einem Tablett (1) mit einer Aufnahmewanne und mit Halterungen zum Fixieren der in die Aufnahmewanne einzubringenden Informationsplatte versehen. Das Tablett ist mit einer Griffleiste (2) versehen. Auf dem Deckel der Kassette ist wenigstens ein Ausdrückhocken (36) vorgesehen, der beim Verschwenken des Deckels das Tablett im Bereich der Griffleiste vom Boden her hochdrückt.

FIG. 13

FIG.16

## Kombination einer Aufbewahrungskassette und einem Element zur Aufnahme und Halterung einer kreisförmigen Informationsplatte sowie Aufbewahrungskassette und Element zur Aufnahme und Halterung zum Gebrauch in der Kombination.

Die Erfindung bezieht sich auf eine Kombination einer mit einem Boden und einem Deckel versehenen Aufbewahrungskassette und eines Elementes zur Aufnahme und Halterung einer kreisförmigen Informationsplatte, welches Element versehen ist mit einem Tabl einer Aufnahmewanne und mit Halterungen zum Fixieren der in die Aufnahmewanne einzubringenden Informationsplatte.

Aus der EP-A 0 114 631 sind Elemente der genannten Art bekannt, mit denen in einer Aufbewahrungskassette Informationsplatten aufbewahrt werden können. Solche Elemente bilden einen Einsatz für den Boden bzw. den Deckel der Aufbewahrungskassette, die, wie auch die Elemente selbst, als Kunststoffspritzgußteil ausgebildet sind. Die Elemente sind dabei aus dem Boden bzw. dem Deckel der Aufbewahrungskassette schwierig herausnehmbar; sie dienen damit dem Festhalten der Informationsplatte während der Aufbewahrung.

Weiterhin ist es aus "Funkschau", 21/1984, Seite 38, bekannt, für das berührungslose Handhaben von digitalen, optisch auslesbaren Audio-Platten (Compact-Discs) beim Laden bzw. Entladen von Audio-Spielern, von Halterungen Gebrauch zu machen, die U-förmig gestaltet sind und zwischen deren U-Schenkeln die zu handhabende Informationsplatte eingeklemmt ist. Für die Benutzung einer solchen, als Stecklade-Einschub zu bezeichnenden Halterung muß die Informationsplatte zunächst aus ihrer Aufbewahrungskassette herausgenommen und in die Halterung eingebracht werden. Die Handhabung einer Compact-Disc mittels solch einer Halterung ohne Fingerberührung ist schwierig.

Es ist Aufgabe der Erfindung, für das Handhaben von Informationsplatten im Zusammenhang mit dem Laden und Entladen einer Abspieleinrichtung eine Lösung zu schaffen, die die Handhabung der Informationsplatte beim Überführen von der Aufbewahrungskassette in die Abspieleinrichtung erleichtert, wobei die Platte nicht berührt zu werden braucht.

Die gestellte Aufgabe ist erfindungsgemäß dadurch gelöst, daß das Tablett an einer Seite mit einer Griffleiste versehen ist, in deren Bereich eine der Halterungen federnd ausgebildet ist, und daß auf dem Deckel der Aufbewahrungskassette wenigstens ein Ausdrücknocken vorgesehen ist, der beim Verschwenken des Deckels über mehr als 180° das Tablett im Bereich der Griffleiste vom Boden her hochdrückt. Mittels der Griffleiste läßt sich das Tablett leicht erfassen und in die Aufbewahrungskassette ein- und ausbringen. Beim Schwenken des Deckels der Aufbewahrungskassette um mehr als 180° wird das in der Kassette anwesende Tablett im Bereich der Griffleiste automatisch hochgedrückt, womit die Griffleiste zum Anfassen frei wird. Dies ist wichtig im Hinblick auf die Aufgabe der Erfindung, nach der das Tablett sowohl beim Aufbewahren als auch beim Laden und Entladen der Platte einsetzbar sein soll.

Durch die Einführung des Tabletts liegt die Informationsplatte während der Aufbewahrung im Tablett in der Aufbewahrungskassette. Beim Überführen in die Abspieleinrichtung braucht nur das Tablett mit der Hand erfaßt und aus der Kassette herausgenommen zu werden. Mit dem Tablett wird die Informationseinrichtung überführt. Das Tablett hat damit eine doppelte Funktion, nämlich das Festhalten der Informationsplatte während der Aufbewahrung in der Aufbewahrungskassette und das berührungslose Überführen der Informationsplatte von der Kassette in die Abspieleinrichtung.

Durch das Haltern der Informationsplatte mittels Halterungen, die einander am Rand der Aufnahmewanne gegenüberliegen, wird die Möglichkeit geschaffen, daß der Lade- bzw. Entlademechanismus beim Einschieben des Tabletts in die Abspieleinrichtung die Platte von den Halterungen löst und in die Spielstellung bringt.

Nach einer weiteren Ausgestaltung der Erfindung ist vorgesehen, daß zwei Ausdrücknocken vorgesehen sind, die gegen Stoßkanten an beiden Enden der Griffleiste drückbar sind. Diese Ausbildung sichert, daß die Griffleiste an beiden Seiten gleichmäßig hochgedrückt wird. Das Tablett kann damit beim Anheben nicht verkanten.

Nach einer weiteren Ausgestaltung der Erfindung ist vorgesehen, daß die Griffleiste an beiden Enden Rastnocken aufweist, die in Gelenköffnungen der Aufbewahrungskassette eingreifen, die der gelenkigen Halterung des Deckels am Boden dienen. Den Gelenköffnungen kommt dabei eine doppelte Funktion zu. Zum einen dienen sie dem Sohwenken des Deckels und zum anderen dienen sie dem Aufnehmen der Rastnocken und damit dem Einrasten des Tabletts.

Nach einer weiteren Ausgestaltung der Erfindung ist vorgesehen, daß die Rastnocken an elastisch an der Griffleiste vorgesehen Lappen angeordnet sind. Durch die elastische Ausbildung der Lappen wird das Herausnehmen, also auch wieder das Einführen des Tabletts in die Aufnahmekassette erleichtert.

Nach einer weiteren Ausgestaltung der Erfindung ist vorgesehen, daß die Stoßkanten in unmittelbarer Nähe der Lappen an der Griffleiste vorgesehen sind. Die Ausdrücknocken kommen beim Verschwenken des Deckels damit gleich in die Nähe der Rastnocken. Dies ist vorteilhaft für das Herausdrücken des Tabletts aus den Gelenköffnungen.

Nach einer weiteren Ausgestaltung der Erfindung ist vorgesehen, daß an den Innenseiten von Bodenseitenwänden vorstehende Ansätze vorgesehen sind, Lade- bzw. Entladeführungen fahrbar sind zur Arretierung des Tabletts auf der der Griffleiste gegenüberliegenden Seite. Auch die nicht mittels Rastnocken gesicherte Seite des Tabletts ist durch diese Unterfahrführung gegen ein Herausfallen gesichert.

Nach einer weiteren Ausgestaltung der Erfindung ist vorgesehen, daß die der Griffleiste gegenüberliegende Seite des Tabletts eine schräge Kante aufweist. Eine solche schräge Kante erleichtert das Einbringen des Tabletts in den Boden der Aufbewahrungskassette.

Die Erfindung wird anhand der Zeichnungen näher erläutert. Es zeigen:

Fig. 1 eine Draufsicht auf ein als Tablett ausgebildetes Element und eine in dasselbe aufgenommene Informationsplatte,

Fig. 2 eine Ansicht des Elementes gemäß Pfeil II in Fig. 1,

Fig. 3 eine Seitenansicht des Elementes gemäß dem Pfeil III in fig. 1,

Fig. 4 einen Schnitt durch das Element längs der Linie IV-IV nach Fig. 1,

Fig. 5 in vergrößertem Maßstab einen Teil des Elementes gemäß Linie V-V in Fig. 1 im Schnitt,

Fig. 6 eine Ansicht des Elementes in Richtung des Pfeiles VI in Fig. 1,

Fig. 7 einen Draufsicht auf die Bodenseite des Elementes nach Fig. 1,

Fig. 8 einen Schnitt durch das Element längs der Linie VIII-VIII in Fig. 7,

Fig. 9 eine Ansicht eines Teiles des Elementes in einer abgewandelten Ausführungsform,

Fig. 10 eine Ansicht eines anders ausgebildeten Teiles des Elementes nach Fig. 1 ohne Informationsplatte,

Fig. 11a eine Ansicht eines wieder anders ausgebildeten Teiles des Elementes nach Fig. 1 ohne Informationsplatte,

Fig. 11b eine Ansicht eines federnden Bügels des Elementes nach Fig. 11a,

Fig. 12a eine Ansicht eines wieder anders ausgebildeten Teiles des Elementes nach Fig. 1 ohne Informationsplatte,

Fig. 12b eine Ansicht eines federnden Bügels des Elementes nach Fig. 12a,

Fig. 13 einen Schnitt durch eine erfindungsgemäße Kombination aus einer Aufnahmekassette und einem in ihr aufgenommenen Tablett zur Aufnahme einer Informationsplatte,

Fig. 14 eine Seitenansicht der Kombination nach Fig. 13,

Fig. 15 einen Ausschnitt aus der Aufnahmekassette im Bereich des Scharnieres zwischen Boden und Deckel, wobei der Deckel um 180° gegenüber dem Boden verschwenkt ist,

Fig. 16 die Scharnierausbildung nach Fig. 15, wobei der Deckel gegenüber dem Boden um mehr als 180° verschwenkt ist, und

Fig. 17 eine Seitenansicht einer Komination aus zwei gestapelten Elementen nach Fig. 1.

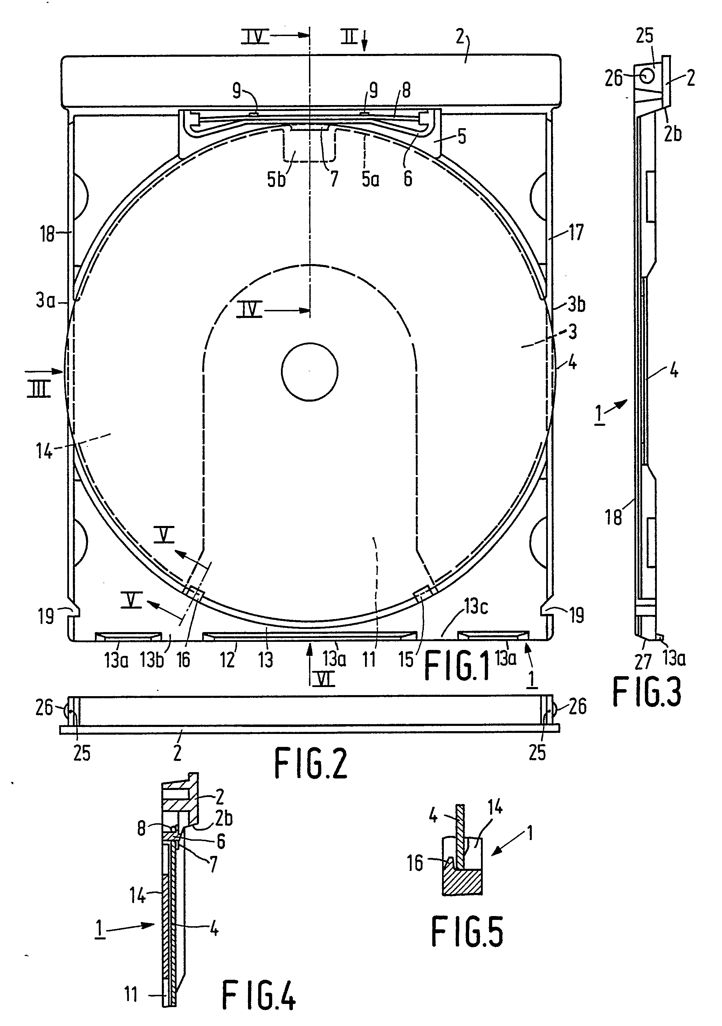

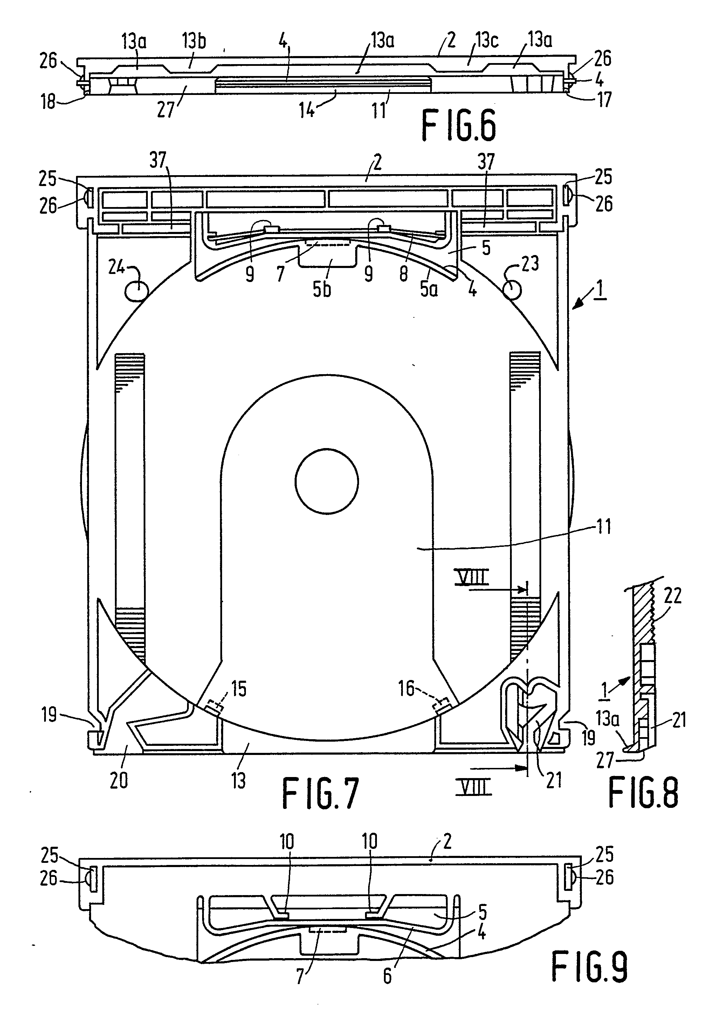

Wie die Draufsicht auf ein in Fig. 1 dargestelltes, als Tablett 1 ausgebildetes Element zeigt, besteht dieses Tablett 1 aus einer rechteckigen Platte mit einer Griffleiste 2 (vergl. auch Fig. 2, 3 und 4). Platte und Griffleiste sind aus Kunststoff gespritzt. Die Griffleiste ist vorzugsweise an ihrer Oberfläche gerippt, damit sie sich besser erfassen läßt. Dasselbe gilt für die Unterseite des Tabletts, insbesondere im Bereich der Griffleiste 2. Im Zentrum des Tabletts 1 ist eine Aufnahmewanne 3 vorgesehen, die etwas vertieft angeordnet ist und einen Umfang hat, der etwas größer ist als eine Informationsplatte 4. Die Informationsplatte ist in diesem Ausführungsbeispiel eine Compact-Disc (eine digitale, optisch auslesbare Audioplatte). An den Seitenrändern 3a, 3b ist die Aufnahmewanne derart offen, daß der Rand der Informatonsplatte mit der Hand leicht erfaßbar ist. Zwischen dem Rand der Aufnahmewanne 3 und der Griffleiste 2 ist eine erste Ausnehmung 5 vorgesehen. Diese erste Ausnehmung 5 hat eine bestimmte Breite. Innerhalb der ersten Ausnehmung 5 befindet sich ein aus Kunststoff gebildeter federnder Bügel 6, der vorzugsweise in das Tablett integriert ist. Die Enden des federnden Bügels 6 schließen an der Griffleiste an. In der Mitte des federnden Bügels ist ein als Halterung dienender Nocken 7 vorgesehen, der in Richtung auf das Zentrum des Tabletts weist. Durch die Elastizität des federnden Bügels wird der Nocken 7 nach innen gedrückt. Die Elastizität des federnden Bügels 6 wird unterstützt mittels eines Federstabes 8 (vergl. auch Fig. 7). Der Federstab 8 kann nachträglich eingesetzt werden oder beim Spritzen gleich mit eingebettet sein. Für das nachträgliche Einbringen des Federstabes 8 sind in den Füßen des federnden Bügels 6 vorzugsweise Einschubschlitze vorgesehen. Weiterhin sind am federnden Bügel 6 kleine Haltenocken 9 vorgesehen, mit denen der Federstab 8 positionierbar ist. Die erste Ausnehmung 5 ist zur Aufnahmewanne 3 hin begrenzt mittels einer bogenförmigen Randbegrenzung 5a. Diese Randbegrenzung 5a ist etwa dek-

kend mit dem Plattenrand. In der Mitte der bogenförmigen Randbegrenzung 5a befindet sich gegenüber der Halterung 7 eine Aussparung 5b, die die bogenförmige Randbegrenzung 5a unterbricht. Die Aussparung 5b erstreckt sich in Richtung auf die Tablettmitte und hat eine etwa rechteckige Kontur. In diese Aussparung 5b kann ein Stift des Lademechanismus einer Abspieleinrichtung eingreifen.

Wie alternativ in Fig. 9 dargestellt ist, kann die federnde Unterstützung auch mit Hilfe von Kunststoff-Federnasen 10 erfolgen, die von der Griffleiste 2 her gegen die Rückseite des federnden Bügels 6 drücken. Die Federnasen 10 sind vorzugsweise zusammen mit dem Tablett gespritzt.

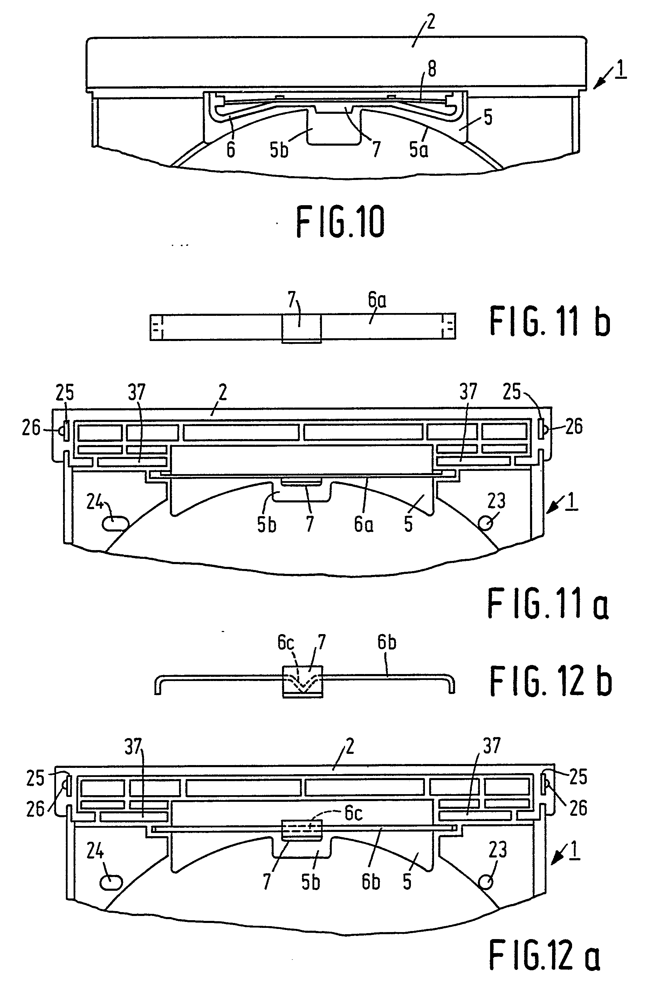

Fig. 10 zeigt eine weitere Variante der Anordnung des federnden Bügels 6, wobei, wenn keine Platte aufgenommen ist, der federnde Bügel durch den Federstab 8 gegen die bogenförmige Randbegrenzung 5a gedrückt wird, wodurch die Halterung 7 genau positioniert ist. Nach Aufnahme der Platte liegt der Bügel 6 vorzugsweise wieder frei von der Randbegrenzung 5a. In der Ausbildung nach Fig. 10, aber auch in den anderen Ausbildungen, ist es vorteilhaft, wenn die Oberseite der Halterung 7 eine schräge Kante aufweist. Diese schrage Kante soll das Aufnehmen der Platte 4 in die Aufnahmewanne 3 und das Festklemmen hinter der Halterung 7 erleichtern.

Fig. 11a und 11b zeigen, daß alternativ die Halterung 7 im mittleren Bereich einer Blattfeder 6a vorgesehen ist. Die Blattfeder 6a ist eine Metallfeder und bildet eine ausreichende Abstützung der Platte auch bei höheren Temperaturen. Die Halterung 7 besteht aus Kunststoff und ist an der Blattfeder gespritzt oder geklebt.

Wie in den Fig. 12a und 12b dargestellt, kann die Halterung 7 auch im mittleren Bereich einer Drahtfeder 6b vorgesehen sein. Hierbei ist es vorteilhaft, die Feder 6b im mittleren Bereich mit einer Durchbiegung 6c auszuführen und durch Umspritzen die Halterung anzubringen. Weiter kann alternativ auf nicht dargestellte Weise eine Schraubenfeder-Konstruktion statt einer Blatt- oder Drahtfeder benutzt werden.

Im Bereich der Aufnahmewanne 3 ist eine zweite Ausnehmung 11 vorgesehen, die U-förmig gestaltet und auf der von der Griffleiste abliegenden Seite kelchförmig an ihren Enden aufgeweitet ist. Das Tablett ist über die U-förmige Ausnehmung hinweg auf der der Griffleiste 2 gegenüberliegenden Seite 12 mit einer Brücke 13 versehen. Die Brücke dient der Verbesserung der Stabilität der Seite 12. Die Brücke 13 liegt, wie sich aus Fig. 6 ergibt, etwas höher als der Boden 14 der Aufnahmewanne 3. Die Brücke 13 weist einen Seitenrand 13a auf, der sich aufwärts erstreckt und mit Aussparungen 13b und 13c versehen ist.

Im Bereich der Öffnung der Ausnehmung 11 sind feste Halterungen 15 und 16 vorgesehen, die derart gegenüber dem Boden 14 angeordnet sind, daß die Platte 4 zwischen dem Boden 14 und den festen Halterungen 15, 16 festgeklemmt wird. Die festen Halterungen 15, 16 befinden sich im Bereich der Brücke 13. Die Ausbildung der festen Halterungen 15, 16 ist vergrößert dargestellt in Fig. 5.

Im Bereich der Seitenränder 3a, 3b sind Führungsleisten 17, 18 vorgesehen, die das Tablett seitlich begrenzen. Die Führungsleisten 17, 18 dienen der Einschubführung beim Einschieben des Tabletts 1 in den Lade- bzw. Entlademechanismus der Abspieleinrichtung. Da die Führungsleisten an der Unterseite des Tabletts 1 vorgesehen sind, verhindern sie ein fehlerhaftes Einschieben des Tabletts in den Lade- bzw. Entlademechanismus.

Im Bereich der seitlichen Führungsleisten 17, 18 sind erste Lade- bzw. Entladeführungen 19 vorgesehen, die Unterbrechungen der Führungsleisten 17, 18 darstellen. Der Lade- bzw. Entlademechanismus kann in diese ersten Lade- bzw. Entladeführungen 19 eingreifen und das Tablett damit einziehen bzw. herausstoßen. Wie Fig. 7 zeigt, gibt es weiterhin eine hakenförmige zweite Lade- bzw. Entladeführung 20, die einem ähnlichen Zweck dient. Gegenüber der hakenförmigen zweiten Lade-bzw. Entladeführung ist eine dritte Lade- bzw. Entladeführung 21 vorgesehen, die herzkurvenartig ausgebildet ist. Diese dritte Lade-bzw. Entladeführung 21, die in Fig. 8 zusätzlich noch im Schnitt dargestellt ist, dient vorzugsweise dazu, das Tablett in einer nicht dargestellten Sammelaufnahme festzuhalten, die nach dem Druck-druckprinzip arbeitet. Das bedeutet, daß das Tablett beim ersten Andruck verriegelt wird innerhalb der Sammelaufnahme und beim zweiten Drücken herausspringen kann. Weiterhin sind noch Zahnstangenführungen 22 vorgesehen, die in Einschubrichtung verlaufen und mit Rädern eines Einschubes zusammenarbeiten können. An der Bodenseite sind auch noch Positionierlöcher 23, 24 vorhanden. Das Positionierloch 23 ist dabei rund ausgebildet, während das Positionierloch 24 etwas länglich gestaltet ist. Mittels dieser Löcher kann das Tablett nach dem Ladevorgang in der Abspieleinrichtung sicher und genau positioniert werden.

An der Unterseite der Griffleiste 2 sind Lappen 25 vorgesehen, die etwa senkrecht von der Griffleiste abstehen. Da die Lappen 25 frei abstehen, sind sie etwas nachgiebig. An den Lappen 25 sind nach außen vorstehende Rastnocken 26 vorgesehen (Fig. 3 und 7).

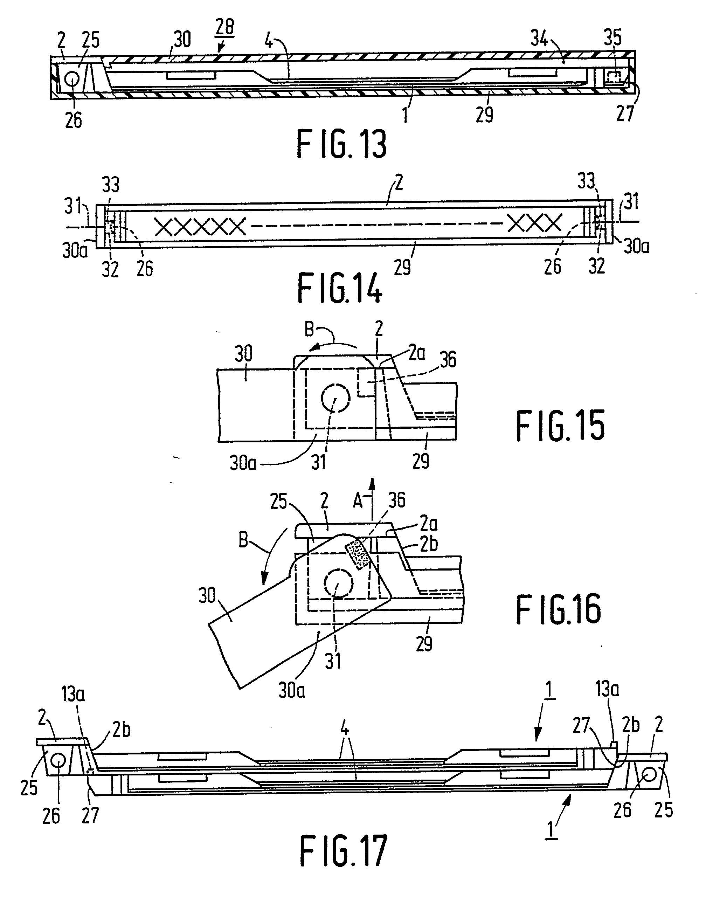

An der der Griffleiste 2 gegenüberliegenden Seite 12 des Tabletts 1 ist, wie in Fig. 3 dargestellt, eine schräge Kante 27 vorgesehen. Diese schräge Kante 27 soll das Einschieben des Tabletts in eine Aufnahmekassette 28 erleichtern (Fig. 13 und 14). Diese Aufnahmekassette 28 besteht aus einem Boden 29 und einem Deckel 30. Boden 29 und Deckel 30 sind mittels eines Scharnieres 31 schwenkbar miteinander verbunden. Das Scharnier 31 besteht aus Gelenköffnungen 32 im Bodenteil 29 und in diese Öffnungen 32 eingreifenden Gelenkstiften 33, die an Auslegern 30a des Deckels vorgesehen sind. Ebenso wie die Gelenkstifte 33 greifen auch die Rastnocken 26 in die Gelenköffnungen 32 des Bodenteiles ein, und zwar an der von den Auslegern abgewandten Seite. Die Öffnungen 32 haben damit eine doppelte Funktion, nämlich einmal das Tablett in dem Boden 29 zu verrasten und andererseits den Deckel gelenkig am Boden festzuhalten.

Die Bodenseitenwände 34 sind mit Ansätzen 35 versehen, unter die die Führungsleisten 17, 18 greifen können. Das Tablett 1 ist damit auch an der von der Griffleiste 2 abliegenden Seite mit dem Boden 29 verbunden. Auch in den Bodenseitenwänden 34 sind seitliche Öffnungen vorgesehen, die das Ergreifen der Informationsplatte 4 erleichtern.

Auf den Innenseiten der Ausleger 30a sind Ausdrücknocken 36 vorgesehen. Die Seitenwände 34 müssen im Bereich der Öffnungen 32 etwas dünner ausgebildet sein, damit die Ausdrücknocken 36 beim Schwenken nicht behindert werden. Wie in Fig. 15 dargestellt, drücken die Ausdrücknocken 36 nach einem Schwenken über 180° gegen Stoßkanten 2a der Griffleiste 2, wodurch die Griffleiste und damit das Tablett aus dem Boden hochgedrückt wird in Richtung eines Pfeiles A in Fig. 16. Das Hochdrücken erfolgt bei einem Schwenken des Deckels 30 um einen Winkel von mehr als 180° gemäß Pfeil B in Fig. 16. Die Griffleiste 2 kann dann leicht mit der Hand erfaßt und mit dem Tablett 1 aus dem Boden 29 herausgenommen werden. Die Führungsleisten 17, 18, ziehen sich beim Hochheben aus dem Bereich der Ansätze 35 heraus. Das Tablett 1 ist damit frei.

Nach dem Herausheben des Tabletts mit der Platte 4 aus der Aufnahmekassette 28 kann das Tablett in den Lade- bzw. Entlademechanismus eingeschoben werden. Hierbei wird die Halterung 7 zurückgedrückt, und die Platte wird freigelegt.

Das Tablett hat damit eine doppelte Funtion, nämlich für das Festhalten der Informationsplatte und gleichzeitig als Ladehilfe für das Laden bzw. Entladen der Platte in der Abspieleinrichtung. Das Tablett gibt die Möglichkeit, die in einer üblichen Aufnahmekassette vorhandene Einlage zu ersetzen. Vorzugsweise besteht das Tablett 1 aus einer Mischung aus Kunststoffen, wie Polykarbonat. Dieser Werkstoff gibt dem Tablett eine gute Stabilität.

Die erfindungsgemäßen Tabletts sind wie dargestellt in Fig. 17 stapelbar durch die Abstimmung der Geometrie von Ober- und Unterseite der Tabletts. Hierbei liegt die schräge Kante 27 des ersten Tabletts grenzend an einer schrägen Kante 26 der Griffleist 2 des zweiten Tabletts nach gegenseitiger Versetzung des Tabletts um 180°. Der Seitenrand 13a des zweiten Tabletts steckt mit dem Mittenteil in der Ausnehmung 5 des ersten Tabletts, während die seitlichen Teile des Seitenrandes 13a in länglichen Aussparungen 37 stecken, die, wie in Fig. 7 dargestellt, an der Bodenseite jedes Tabletts vorhanden sind. Hierdurch ist eine gegenseitige Verschiebung der gestapelten Tabletts ausgeschloßen.

## Ansprüche

1. Kombination einer mit einem Boden und einem Deckel versehenen Aufbewahrungskassette und eines Elementes zur Aufnahme und Halterung einer kreisförmigen Informationsplatte, welches Element versehen ist mit einem Tablett mit einer Aufnahmewanne und mit Halterungen zum Fixieren der in die Aufnahmewanne einzubringenden Informationsplatte, dadurch gekennzeichnet, daß das Tablett an einer Seite mit einer Griffleiste (2) versehen ist, in deren Bereich eine der Halterungen federnd ausgebildet ist, und daß auf dem Deckel der Aufbewahrungskassette (30) wenigstens ein Ausdrücknocken (36) vorgesehen ist, der beim Verschwenken des Deckels (30) über mehr als 180° das Tablett im Bereich der Griffleiste (2) vom Boden (29) her hochdrückt.

2. Kombination nach Anspruch 1, dadurch gekennzeichnet, daß zwei Ausdrücknocken (36) vorgesehen sind, die gegen Stoßkanten (2a) an beiden Enden der Griffleiste (2) drückbar sind.

3. Kombination nach Anspruch 2, dadurch gekennzeichnet, daß die Griffleiste (2) an beiden Enden Rastnocken (26) aufweist, die in Gelenköffnungen (32) der Aufbewahrungskassette (28) eingreifen, die der gelenkigen Halterung des Deckels (30) am Boden (29) dienen.

4. Kombination nach Anspruch 3, dadurch gekennzeichnet, daß die Rastnocken (26) an elastisch an der Griffleiste (2) vorgesehenen Lappen (25) angeordnet sind.

5. Kombination nach den Ansprüchen 2 und 4, dadurch gekennzeichnet, daß die Stoßkanten (2a) in unmittelbarer Nähe der Lappen (25) an der Griffleiste (2) vorgesehen sind.

6. Kombination nach einem der Ansprüche 1 bis 5, dadurch gekennzeichnet, daß an den Innenseiten von Bodenseitenwänden (34) vorstehende Ansätze (35) vorgesehen sind, unter die Teile der Führungsleisten (17, 18) fahrbar sind zur Arretierung des Tabletts (1) auf der der Griffleiste (29 gegenüberliegenden Seite.

7. Kombination nach Anspruch 6, dadurch gekennzeichnet, daß die der Griffleiste (2) gegenüberliegende Seite des Tabletts (1) eine schräge Kante (27) aufweist.

8. Aufbewahrungskassette zum Gebrauch in einer Kombination nach einem der Ansprüche 1 bis 7.

9. Element versehen mit einem Tablett zum Gebrauch in einer Kombination nach einem der Ansprüche 1 bis 7.

FIG.1

FIG.2

FIG.3

FIG.4

FIG.5

1-IV-PHD 85-475-EP-A

FIG.6

FIG.7

FIG.8

FIG.9

2-IV-PHD 85-475-EP-A

FIG.10

FIG. 11 b

FIG.11 a

FIG. 12 b

FIG.12 a

FIG.13

FIG.14

FIG.15

FIG.16

FIG.17